# EUROPÄISCHE PATENTANMELDUNG

(11) **EP 0 710 583 A1**
(43) Veröffentlichungstag der Anmeldung: **08.05.1996**
(21) Anmeldenummer: 95100890.3
(22) Anmeldetag: 24.01.1995
(51) Int. Cl.: B60P 3/075

(54) **Arretierkeilvorrichtung zur Sicherung von Kraftfahrzeugen auf Strassentransporten**

(30) Priorität: 05.11.1994 DE 9417758 U
(71) Anmelder: Eisenschenk, Günther, D-93491 Stamsried (DE)
(72) Erfinder: Eisenschenk, Günther, D-93491 Stamsried (DE)
(74) Vertreter: Wasmeier, Alfons, Dipl.-Ing.

(57) **Zusammenfassung**

Bei einer Arretierkeilvorrichtung zur Sicherung von Kraftfahrzeugen auf Straßentransportern ist auf der von der Keilfläche (6) abgewandten Seite der Keilvorrichtung eine Rollanordnung (10) vorgesehen, die der Außenseite der Räder des zu transportierenden Kraftfahrzeuges zugeordnet ist.

## Beschreibung

Die Erfindung betrifft Arretierkeile noch dem Oberbegriff des Anspruches 1.

Derartige Arretierkeile werden zur Sicherung von Kraftfahrzeugen auf Transportern in der Weise eingesetzt, daß die Keile quer zur Längsrichtung des Transporters mit dessen Boden lösbar so verbunden werden, daß jedem Reifen des zu transportierenden Fahrzeuges ein Keil zugeordnet und damit das Fahrzeug arretiert wird. Zum An- und Abfahren sowie zum Positionieren des Fahrzeuges werden die Arretierkeile aus der Sicherungsposition entfernt und seitlich mit dem Boden bzw. Langlöchern im Boden so verriegelt, daß die Längsachse des Keiles in Längsrichtung bzw. Fahrtrichtung des Transporters angeordnet ist. Bei bisher bekannten Keilen besteht dabei die Gefahr, daß das Kraftfahrzeug beim An- und Abfahren von der Fahrspur nach rechts oder links abweicht und die Reifen in Kontakt mit den in Fahrtrichtung angeordneten Begrenzungskeilen kommen und Schaden nehmen. Die auf diese Weise bereits aufgetretenen Beschädigungen haben zu ernsthaften Beschwerden der Kraftfahrzeughersteller geführt.

Aufgabe der Erfindung ist es, die gattungsgemäßen Arretierkeile so auszubilden, das diese Beschädigungen sicher vermieden werden, daß aber die Keilfunktion zur Sicherung der Kraftfahrzeuge auf dem Transporter unverändert aufrechterhalten wird.

Gemäß der Erfindung wird diese Aufgabe mit den Merkmalen des Kennzeichens des Anspruches 1 gelöst. Weitere Ausgestaltungen der Erfindung sind Gegenstand der Unteransprüche.

Mit den Erfindungsgemäßen Arretierkeilen wird erreicht, daß zur Sicherung des Kraftfahrzeuges und zur Festlegung der Keile quer zur Längsachse des Transporters (Arretierposition) die Fahrzeugreifen an der Keilfläche anliegen und das Fahrzeug damit arretiert wird, und daß in der verstauten Position bzw. in der Belade- und Entladeposition (Positionierposition) die Keile mit der Rollenseite parallel zur Kraftfahrzeuglängsseite angeordnet sind, derart, daß bei seitlicher Abweichung des Kraftfahrzeuges von der Spur die Reifenaußenseite mit der Rollanordnung des jeweiligen Keiles in Eingriff kommt, die Rollanordnung sich dabei mit der Drehung des Reifens dreht und aufgrund dieser kombinierten Abrollbewegung eine Beschädigung der Reifenaußenseite wirksam verhindert wird.

Die Rollanordnung ist z.. B. so ausgelegt, daß eine oder mehrere Rollen oder Scheiben auf einer gemeinsamen horizontalen Achse parallel zur Keilfläche bzw. in Richtung der Keilachse und in Richtung der Fahrzeuglängsachse aneinander anschließend vorgesehen sind. Sie kann z. B. auch in Form von auf einer gemeinsamen horizontalen Achse gelenkig angeordneten Kugeln anstatt Rollen ausgebildet sein. Nach einer weiteren Ausführungsform der Erfindung besteht die Rollanordnung aus einzelenen Scheiben, Rollen, Kugeln oder dgl., die jeweils einzeln um vertikale bzw. schräge Achsen drehbar angeordnet sind, so daß der damit in Kontakt kommende Reifen eines Kraftfahrezeuges an den Drehelementen in einer horizontalen oder zur horizontalen geneigten Ebene abrollt.

In weiterer Ausgestaltung der Erfindung kann das gesamte keilförmige Element als Drehelement ausgebildet sein, wobei bei einer derartigen Ausführung und Verwendung als Arretierkeil das Drehelement gegen Drehung gesichert wird, damit eine einwandfreie Arretierung erreicht wird. Entscheidend für die Funktion der Anordnung ist, daß der Arretierkeil auf der Rollseite, die von der Keilfläche abgewandt ist, eine glatte Fläche ohne vorstehende Teile darstellt, so daß die Reifen durch vorstehende Teile nicht beschädigt werden können und ausschließlich mit den Rollelementen in Verbindung kommen, wobei durch eine Abrollbewegung eine größtmögliche Schonung für die Reifen erreicht wird.

Die Arretierkeile werden mit dem Langblechboden des Transportfahrzeuges in Langlöchern verriegelt, so daß ein einfaches Lösen der Keile sichergestellt ist.

Nach stehend wird die Erfindung in Verbindung mit der Zeichnung anhand von Ausführungsbeispielen erläutert. Es zeigt:
- Fig. 1: in schematischer Darstellung einen Arretierkeil mit Rollanordnung in seitlicher Ansicht,
- Fig. 2: eine Schnittansicht der Ausfühurng nach Fig. 1 in der Schnittlinie I - I.

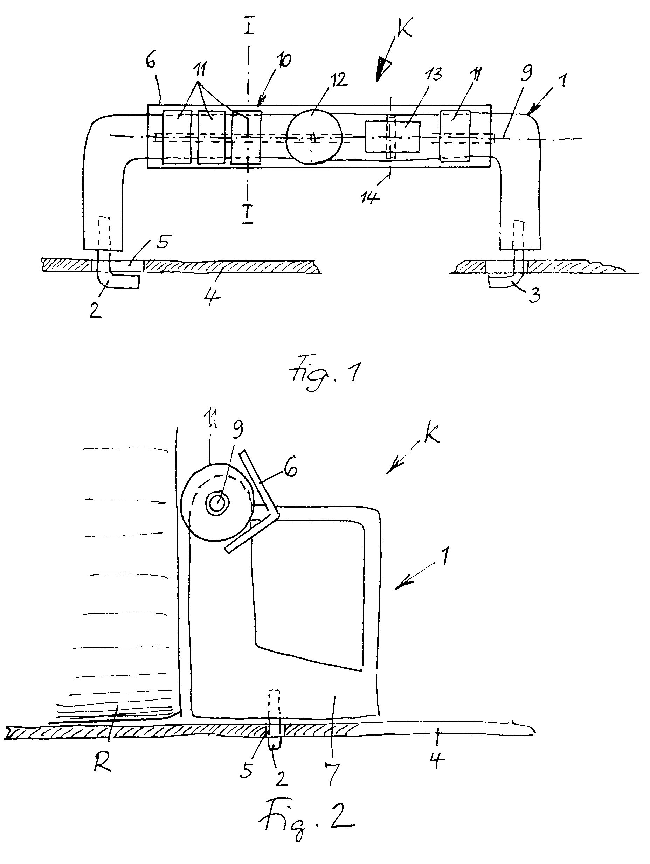

Ein Arretierkeil 1 besteht aus einem langgestreckten U-förmigen Rahmengestell 1, an dessen beiden freien Schenkelenden Bolzen 2, 3, z. B. Federbolzen, vorgesehen sind, die in Langlöcher 5 eines Lochbleches 4 des Bodens des Transporters eingreifen und dort lösbar verriegelt werden, damit der Arretierkeil 1 fest mit dem Transporterboden verbunden werden kann. Am Rahmenteil 1 ist eine Keilfläche 6, z. B. in Form eines Winkeleisens, starr verbunden, z. B. verschweißt ist; das Rahemengestell 1 weist einen Standfuß 7 mit Versteifungsstreben 8 zur Stabilisierung auf. Auf einer am Rahmengestell 1 festgelegten Achse 9 ist eine Rollanordnung 10 drehbar angeordnet, die sich im wesentlichen über die gesamte Länge des Rahmengestells 1 erstreckt und aus einer einzigen Walze oder, wie in Fig. 1 dargestellt, aus einer Mehrzahl von Rollen, Scheiben oder dgl. 11 besteht, die um die Achse 9 drehbar angeordnet sind. Anstelle derartiger Rollen, Scheiben oder dgl. können auch Kugeln 12 angeordnet sein, die ebenfalls um die Achse 9 drehbar sind. In weiterer Ausgestaltung dieser Rollanordnung können Rollen, Scheiben oder dgl. 13 vorgesehen sein, die einzeln in einer vertikalen oder schrägen Achse 14 gelagert, also liegend angeordnet sind, so daß diese Rollen oder dgl. sich um die Achse 14 drehen, wenn ein Reifen des zu transportierenden Fahrzeuges damit in Eingriff kommt.

## Patentansprüche

1. Arretierkeilvorrichtung zur Sicherung von Kraftfahrzeugen auf Straßentransportern, die in Langlöchern des Lochbodens der Straßentransporter lösbar befestigt und aus einer Arretierin eine Be- und Entlade-Position (sowie umgekehrt) umsetzbar sind, wobei in der Be- und Entladeposition die von der Keilfläche abgewandte Seite den Rädern bzw. Reifen des zu transportierenden Fahrzeuges zugewandt ist, dadurch gekennzeichnet, daß auf der von der Keilfläche (6) abgewandten Seite der Keilvorrichtung (K) eine Rollanordnung (10) vorgesehen ist, die der Außenseite der Räder (R) des zu transportierenden Kraftfahrzeuges zugeordnet sind.

2. Arretierkeilvorrichtung nach Anspruch 1, dadurch gekennzeichtnet, daß die Rollanordnung (10) mit dem Rahmengestell (1) der Keilvorrichtung (K) parallel zur Keilfläche (6) fest verbunden ist.

3. Arretierkeilvorrichtung nach Anspruch 1 oder 2, dadurch gekennzeichnet, daß die Rollanordnung (10) aus Einzelrollelementen (11; 12; 13) besteht, die auf einer gemeinsamen horizontalen parallel zur Keilfläche (6) verlaufenden Achse (9) drehbar angeordnet sind.

4. Arretierkeilvorrichtung nach einem der Ansprüche 1 - 3, dadurch gekennzeichnet, daß die Rollelemente Rollen (11), Scheiben, Kugeln (12) oder dgl. Elemente sind.

5. Arretierkeilvorrichtung nach einem der Ansprüche 1 - 3, dadurch gekennzeichnet, daß die Rollanordnung eine durchgehende Walze ist.

6. Arretierkeilvorrichtung nach Anspruch 1 oder 2, dadurch gekennzeichnet, daß die Rollelemente Rollen (13), Scheiben, Kugeln oder dgl. Elemente sind, deren Achsen (14) parallel zueinander stehend ausgebildet sind.

7. Arretierungskeilvorrichtung nach Anspruch 6, dadurch gekennzeichnet, daß die Drehachsen der Rollelemente geneigt zur Vertikalen angeordnet sind.
